# EUROPÄISCHE PATENTANMELDUNG

(11) **EP 3 434 458 A1**
(43) Veröffentlichungstag der Anmeldung: **30.01.2019**
(21) Anmeldenummer: 17182885.8
(22) Anmeldetag: 24.07.2017
(51) Int. Cl.: B29C 70/46, B29K 105/04, B29L 31/30, B29C 43/36, B29K 101/12, B29K 309/08

(54) **VERFAHREN ZUR HERSTELLUNG EINES FLÄCHIGEN FORMTEILS AUS EINEM FASERVERSTÄRKTEN THERMOPLASTEN UND DAMIT HERGESTELLTES FORMTEIL**

(71) Anmelder: Quadrant Plastic Composites AG, 5600 Lenzburg 1 (CH)
(72) Erfinder: Die Erfindernennung liegt noch nicht vor
(74) Vertreter: Schmauder & Partner AG Patent- & Markenanwälte VSP

(57) **Zusammenfassung**

Ein Verfahren zur Herstellung eines Formteils aus einem faserverstärkten Thermoplasten durch Verpressen in einem zweiteiligen Formwerkzeug (2), wobei das Formwerkzeug zwei zusammenfahrbare Werkzeugflächen (4,6) aufweist, welche in geschlossenem Zustand des Formwerkzeugs ein dazwischen liegendes Formvolumen (8) definieren, umfasst die folgenden Schritte: mindestens ein Zuschnitt aus einem flächigen Halbzeug aus faserverstärktem Thermoplasten wird auf eine Temperatur oberhalb des Schmelzpunktes des Thermoplasten erwärmt und dort gehalten, wobei ein thermisch expandierter Zuschnitt A gebildet wird; der thermisch expandierte Zuschnitt A wird in das offene Formwerkzeug eingelegt; und das Formwerkzeug wird zugefahren, wobei der darin befindliche Zuschnitt verdichtet und gegebenenfalls mit der textilen Decklage verbunden wird und dabei das Formteil (16) gebildet wird. Dadurch, dass der Zuschnitt A mindestens eine erste Lage A1 mit einem Gehalt von 10 bis 70 Gew.-% Verstärkungsfasern umfasst, welche vor dem Erwärmen einen Luftporengehalt von höchstens 5 Vol.-% aufweist, und dass der Zuschnitt A nach dem Verdichten mindestens einen porösen Flächenbereich (18) mit einem Luftporengehalt von mindestens 2 bis 80 Vol.-% aufweist, lassen sich Formteile mit verbesserten Eigenschaften herstellen.

## Beschreibung

### Technisches Gebiet

Die vorliegende Erfindung betrifft ein Verfahren zur Herstellung eines flächigen Formteils aus einem faserverstärkten Thermoplasten. Des Weiteren betrifft die Erfindung ein mit dem erfindungsgemässen Verfahren hergestelltes Formteil sowie eine Verwendung desselben.

### Stand der Technik

Thermoplastisch verformbare Halbzeugplatten aus faserverstärkten Thermoplasten, insbesondere in Form von glasfaserverstärktem Polypropylen, auch als GMT-Platten bezeichnet, werden seit längerer Zeit zur Herstellung von Formteilen, insbesondere für Kraftfahrzeugteile eingesetzt. Derartige, im Allgemeinen 0.5 bis 3 mm dicke "Kunststoffbleche" zeichnen sich durch hohe Zähigkeit und Festigkeit aus. Darüber hinaus ist GMT fliessfähig, so dass es beim Heissverpressen des Halbzeugs zu Fertigteilen die Innenkonturen der Werkzeugform vollständig ausfüllt. GMT-Halbzeug wird in grosstechnischem Massstab hergestellt durch Zusammenführen von Endlos-Glasmatten und Polypropylen-Schmelzebahnen auf einer Doppelbandpresse.

Die DE 19520477 A1 beschreibt ein Verfahren zur Herstellung eines mehrschichtigen Bauteils, das einen Stützkern aus einer thermisch expandierten GMT-Platte und eine Deckschicht umfasst. Dabei wird eine GMT-Platte über den Schmelzpunkt des Thermoplasten erhitzt, wodurch aufgrund von Rückstellkräften der Verstärkungsfasern, die im nunmehr nicht mehr erstarrten Thermoplasten nicht mehr zusammengedrückt werden, eine Expansion der GMT-Platte stattfindet. Bei dieser auch als "Loft" bezeichneten Expansion steigt insbesondere die Dicke der Platte in Abhängigkeit von der Art der Faserverstärkung bzw. von der Art der Vernadelung bei Verwendung von Vliesen oder Matten etwa auf das 1.5- bis 5-fache. Die so erhaltene expandierte GMT-Platte wird durch Abkühlen unter die Schmelztemperatur stabilisiert. Derartige expandierte GMT-Platten werden bevorzugt zur Herstellung von mehrschichtigen Bauteilen mit guter Festigkeit und Steifigkeit bei gleichzeitig geringer Dichte verwendet. Bei einer weiteren Anwendung wird ein ein- oder mehrschichtiger Stützkern aus expandiertem GMT mit mindestens einer Deckschicht versehen.

Für zahlreiche Anwendungen ist es allerdings vorteilhaft, anstelle von GMT-Halbzeug einen porösen Werkstoff zu verwenden, der ebenfalls aus einem faserverstärkten Thermoplasten gebildet wird, aber Luftporen in gleichmässiger Verteilung enthält. Damit lassen sich Fertigteile herstellen, die leichter und Geräusch absorbierender sind als Fertigteile aus GMT-Halbzeug. Die Herstellung derartiger luftporenhaltiger Halbzeugplatten, nachfolgend auch als LWRT-Platten (engl. "Light Weight Reinforced Thermoplastic") bezeichnet, erfolgt in der Praxis nach zwei Verfahren. Bei dem in der WO 2006/105682 beschriebenen Trockenverfahren werden beispielsweise Polypropylenfasern und Glasfasern vermischt, das erhaltene Mischvlies wird vernadelt, auf Temperaturen oberhalb des Erweichungspunktes des Polypropylens erwärmt und auf einer Doppelbandpresse bei Drücken unterhalb von 1 bar verpresst. Bei einem Nassverfahren werden Schnittglasfaserbündel und Polypropylenpartikel in einer wässrigen Lösung eines Emulgiermittels dispergiert, die Dispersion wird abgepresst, getrocknet und heiss verpresst. Die dabei erhaltene Platte wird dann thermisch zu einem porösen Halbzeug expandiert.

Die WO 2008/101360 A1 beschreibt ein gattungsgemässes Verfahren zur Herstellung von strukturell verstärkten Formteilen aus LWRT. Dabei wird ein Zuschnitt aus dem erwähnten LWRT-Halbzeug in eine zweiteilige Form eingelegt. Dazu wird zunächst aus einer Halbzeugbahn oder -platte ein vorzugsweise rechtwinkliger Zuschnitt, der z.B. 1000 bis 2000 mm lang und 300 bis 1000 mm breit ist und etwa die Dimensionen des Formteils aufweist, herausgeschnitten und in die Form eingelegt. Anschliessend werden dann einer oder mehrere GMT-Streifen mit einem Gehalt von 0 bis 60 Gew.-% Verstärkungsfasern und einem Gehalt an Luftporen von weniger als 5 Vol.-%, die ebenfalls auf eine Temperatur oberhalb des Erweichungspunktes des Thermoplasten erwärmt wurden, am Rand des Zuschnitts überlappend mitverpresst.

Nach wie vor besteht ein erheblicher Bedarf für weitere, insbesondere auch biegesteife Formteile bzw. für entsprechende Herstellungsverfahren. Insbesondere sind Formteile erwünscht, deren Eigenschaften für bestimmte Anwendungen deutlich verbessert sind, sowie für einfachere und kostengünstigere Herstellungsverfahren mit erhöhter Variabilität.

### Darstellung der Erfindung

Eine Aufgabe der Erfindung ist es demnach, ein Verfahren zur Herstellung eines Formbauteils anzugeben. Eine weitere Aufgabe der Erfindung besteht in der Bereitstellung eines entsprechenden Formbauteils sowie in der Angabe von Verwendungszwecken desselben.

Gelöst werden diese Aufgaben durch das im Anspruch 1 definierte Herstellungsverfahren sowie durch das im Anspruch 12 definierte flächige Formteil und die im Anspruch 15 definierten Verwendungen desselben.

Vorteilhafte Ausgestaltungen der Erfindung sind nachfolgend beschrieben und in den abhängigen Ansprüchen definiert.

Das erfindungsgemässe Verfahren zur Herstellung eines Formteils aus einem faserverstärkten Thermoplasten durch Verpressen in einem zweiteiligen Formwerkzeug, wobei das Formwerkzeug zwei zusammenfahrbare Werkzeugflächen aufweist, welche in geschlossenem Zustand des Formwerkzeugs ein dazwischen liegendes Formvolumen definieren, umfasst die folgenden Schritte:
a) mindestens ein Zuschnitt aus einem flächigen Halbzeug aus faserverstärktem Thermoplasten wird auf eine Temperatur oberhalb des Schmelzpunktes des Thermoplasten erwärmt und dort gehalten, wobei ein thermisch expandierter Zuschnitt A gebildet wird;
b) der thermisch expandierte Zuschnitt A wird in das offene Formwerkzeug eingelegt;
c) optional wird zur Bildung einer Deckschicht des Formteils eine textile Decklage auf den eingelegten Zuschnitt drapiert;
d) das Formwerkzeug wird zugefahren, wobei der darin befindliche Zuschnitt verdichtet und gegebenenfalls mit der textilen Decklage verbunden wird und dabei das Formteil gebildet wird;

Dadurch, dass
- der Zuschnitt A mindestens eine erste Lage A1 mit einem Gehalt von 10 bis 70 Gew.-% Verstärkungsfasern umfasst, welche vor dem Erwärmen einen Luftporengehalt von höchstens 5 Vol.-% aufweist, und dass
- der Zuschnitt A nach dem Verdichten mindestens einen porösen Flächenbereich mit einem Luftporengehalt von mindestens 2 bis 80 Vol.-% aufweist, ergeben sich aus dem erfindungsgemässen Verfahren verschiedene Vorteile.

Der Begriff "Zuschnitt" impliziert im vorliegenden Zusammenhang nicht notwendigerweise eine einstückige Ausgestaltung. Vielmehr ist unter Zuschnitt A die gegebenenfalls aus zwei oder mehreren individuellen Stücken eines gegebenen Materials gebildete Belegung im Formwerkzeug zu verstehen.

Überraschend wurde gefunden, dass das für den bzw. die Zuschnitt(e) A verwendete GMT-Material auch in einem thermisch expandierten, d.h. nicht voll konsolidierten Zustand hervorragende mechanische Eigenschaften beibehält. Demnach erlaubt das erfindungsgemässe Verfahren eine Herstellung von vergleichsweise leichtgewichtigen Formteilen mit gleichzeitig guter mechanischer Belastbarkeit und gegenüber vollständig konsolidierten Teilen höheren Steifigkeiten. Durch Wahl einer geeigneten Werkzeugform lassen sich sog. "near net-shape" Formteile herstellen, die praktisch keine Nachbearbeitung erfordern.

Das Bilden mindestens eines porösen Flächenbereichs mit einem Luftporengehalt von mindestens 2 bis 80, insbesondere etwa 20 bis 30 und besonders ungefähr 25 Vol.-%, d.h. eines nicht vollständig konsolidierten GMT-Materials setzt voraus, dass der im besagten Flächenbereich zur Anwendung kommende Pressdruck vergleichsweise gering bleibt und beispielsweise einen Wert von 5 bar nicht übersteigt. Um dies zu erreichen, ist die die Belegung des Formwerkzeugs, d.h. die Dicke des eingelegten Zuschnittes im betreffenden Bereich unter Berücksichtigung des dort im geschlossenen Zustand vorliegenden Flächenabstandes zu wählen. Die insgesamt geringeren Pressdrucke bedeuten im Vergleich zu Verfahren mit vollständiger Konsolidierung eine Einsparung infolge geringerer Investitionskosten und Energiebedarf. Als weiterer Vorteil sind die insgesamt besseren akustischen Eigenschaften der erfindungsgemäss herstellbaren Formteile zu nennen.

Grundsätzlich richtet sich die Auswahl des als Matrix dienenden Thermoplasten und der verwendeten Verstärkungsfasern nach den üblichen Fachkriterien. Vorteilhafterweise ist der Thermoplast ausgewählt aus Polypropylen (PP), Polyetherimid (PEI), Polyetheretherketon (PEEK), Polyphenylensulfid (PPS), Polyamid (PA), Polyaryletherketon (PAEK) und Polyetherketonketon (PEKK), während die Verstärkungsfasern ausgewählt sind aus Carbonfasern, Glasfasern, Aramidfasern, Basaltfasern und hochschmelzenden Thermoplastfasern. Bei einer bevorzugten Ausführungsform handelt es sich beim Thermoplasten um Polypropylen und bei den Verstärkungsfasern um Glasfasern.

Je nach verwendetem Thermoplastmaterial erfolgt das Expandieren wie auch das Warmhalten und anschliessende Verpressen bei Temperaturen im Bereich von ca. 180ºC (beispielsweise bei Verwendung von Polypropylen) bis ca. 400ºC (beispielsweise bei Verwendung von PEEK).

Gemäss einer vorteilhaften Ausführungsform ist die erste Lage A1 des Zuschnitts A aus einem flächigen glasmattenverstärkten thermoplastischen GMT-Halbzeug aus Polypropylen gebildet. Vorzugsweise wird dafür ein Polypropylen mit einem Schmelzindex MFI (230°C, 2.16kg) von 20 bis 500, insbesondere von 80 bis 200 g/10min verwendet, welches vor dem Erwärmen 10 bis 70 Gew.-%, insbesondere 20 bis 60 Gew.-% vernadelte, ungerichtete Verstärkungsfasern, vorzugsweise Glasfasern mit einer mittleren Länge (Gewichtsmittel) von 5 bis 50, insbesondere 10 bis 40 mm, und vorzugsweise überhaupt keine Luftporen enthält. Bei der thermischen Expansion wächst die Dicke des Zuschnitts auf das 2- bis 4-Fache.

Gemäss einer bevorzugten Ausführungsform (Anspruch 2) weist der Zuschnitt A nach dem Verdichten mindestens einen mit dem porösen Flächenbereich stoffschlüssig verbundenen konsolidierten Flächenbereich auf, dessen Luftporengehalt kleiner als derjenige des porösen Flächenbereichs ist und überdies höchstens 3 Vol.-% beträgt. Eine derartige Konsolidierung setzt einen vergleichsweise hohen lokalen Pressruck von mindestens 100 bar voraus.

Grundsätzlich könnte das erfindungsgemässe Verfahren mit einem unstrukturierten Formwerkzeug durchgeführt werden, das zwei im Wesentlichen ebene oder leicht gekrümmte Werkzeugflächen aufweist. Vorzugsweise werden horizontal schliessende Formwerkzeuge verwendet, aber man könnte grundsätzlich auch vertikal schliessende Formwerkzeuge verwenden, wobei dann für eine Fixierung der einzelnen Zuschnitte gesorgt werden muss.

Bei einer bevorzugten Ausführungsform (Anspruch 3) weist das Formwerkzeug eine strukturierte Werkzeugfläche auf, sodass mindestens eine Zone mit vergrössertem Flächenabstand definiert wird. Zu diesem Zweck ist mindestens eine der Werkzeugflächen mit Vorsprüngen und/oder Rücksprüngen ausgestattet ist. Als Flächenabstand ist im vorliegenden Zusammenhang eine lokale Distanz zwischen zwei einander gegenüberliegenden Stellen der ersten und zweiten Werkzeugfläche zu verstehen. Der Begriff "vergleichsweise vergrössert" ist in Relation zu übrigen Zonen des Formwerkzeugs zu verstehen. Daraus ergibt sich zwangsläufig, dass auch Zonen mit "vergleichsweise verringertem" Flächenabstand existieren.

Im Rahmen der vorliegenden Erfindung dienen Zonen mit vergleichsweise vergrössertem Flächenabstand insbesondere zur Ausbildung von vergleichsweise porösen Flächenbereichen. Die Zonen mit vergleichsweise verringertem Flächenabstand dienen insbesondere zur Ausbildung von konsolidierten Flächenbereichen. Es muss jedoch betont werden, dass der in verschiedenen Bereichen erzielte Konsolidierungsgrad nicht nur vom Flächenabstand, sondern auch von der lokalen Belegung mit Thermoplastmaterial abhängt.

Grundsätzlich können für die Strukturierung des Formwerkzeugs diverse geometrische Formen verwendet werden. Bei einer vorteilhaften Ausführungsform (Anspruch 4) weist das Formwerkzeug einen von einem randständigen Bereich umschlossenen mittigen Bereich auf, wobei entweder der mittige Bereich oder der randständige Bereich die Zone mit vergrössertem Flächenabstand bildet. Mit anderen Worten definiert das Formwerkzeug eine positive oder negative Rahmenstruktur. Wie noch näher erläutert wird, lassen sich damit Formteile mit randständiger Verstärkung und porösem Mittelbereich herstellen. Eine vorteilhafte Eigenschaft solcher Formteile ist, dass sie beim Einbau am konsolidierten Ramenbereich fixiert werden können und dabei der mittige Teil mit verbesserter Oberflächenqualität sichtbar bleiben kann.

Gemäss einer vorteilhaften Ausführungsform (Anspruch 5) ist der erste Zuschnitt A mindestens zweilagig ausgebildet und weist eine auf der ersten Lage A1 liegende zweite Lage A2 mit einem Gehalt von 20 bis 80 Gew.-% Verstärkungsfasern auf, welche vor dem Erwärmen einen Gehalt an gleichmässig verteilten Luftporen von 20 bis 80 Vol.-%, vorzugsweise von 35 bis 70 Vol.-% hat. Mit anderen Worten handelt es sich bei der zweiten Lage A2 um eines der eingangs erwähnten LWRT-Halbzeuge. Vorteilhafterweise sind diese Halbzeuge vor der Expansion (Verfahrensschritt a)) 0.5 bis 10 mm, vorzugsweise 1 bis 5 mm dick und aus faserverstärktem Polypropylen mit einem Schmelzindex MFI (230°C, 2.16kp) von 12 bis 200, vorzugsweise 15 bis 75 g/10min gebildet. Die LWRT-Halbzeuge haben eine Massendichte von beispieslweise 0.2 bis 0.8 g/cm³ und enthalten 20 bis 80, vorzugsweise 40 bis 70 Gew.-% Verstärkungsfasern, die vorzugsweise vernadelt sind. Als Verstärkungsfasern kommen vor allem Glasfasern in Frage, daneben solche aus Kohlenstoff, Basalt, Polyester oder andere hochfeste synthetische Fasern. Auch Naturfasern sind geeignet, z.B. aus Jute, Flachs, Hanf, Sisal, Kenaf oder Baumwolle. Die Fasern weisen im Allgemeinen eine mittlere Länge (Gewichtsmittel) von 10 bis 100, vorzugsweise von 20 bis 50 mm auf. Beim Erwärmen auf Temperaturen oberhalb des Erweichungspunktes des Polypropylens expandiert das Halbzeug aufgrund der Rückstellkräfte der Fasern auf mehr als das doppelte, vorzugsweise auf das drei- bis Zehnfache seiner ursprünglichen Dicke.

Besonders vorteilhaft ist es (Anspruch 6), wenn im Schritt b) mindestens zwei thermisch expandierte Zuschnitte A, B überlappend eingelegt werden, wonach überlappende Zuschnitte in einem jeweiligen Überlappungsbereich stoffschlüssig miteinander verbunden werden. Als "jeweiliger Überlappungsbereich" ist im Falle von mehr als zwei Zuschnitten jeweils ein Überlappungsbereich von zwei einander überlappenden Zuschnitten zu verstehen. Die einzelnen Überlappungsbereiche sind je nach Anwendung und - wie nachfolgend noch näher erläutert wird - je nach Ausführungsvariante des Herstellungsverfahrens unterschiedlich breit, wobei die "Breite" in der Plattenebene und senkrecht zur Überlappungsgrenze von zwei Zuschnitten definiert ist. Ebenso kann die Länge der jeweiligen Überlappungsbereiche entlang der Überlappungsgrenze von zwei Zuschnitten unterschiedlich gewählt werden, wobei je nach Anwendung für eine genügend belastbare stoffschlüssige Verbindung gesorgt werden soll. Gemäss einer Ausführungsform (Anspruch 7) weisen die jeweiligen Überlappungsbereiche eine Länge von 5 bis 300 mm, insbesondere 20 bis 50 mm auf.

Vorteilhaft ist es (Anspruch 8), wenn das Formvolumen in den zur Bildung der jeweiligen Überlappungsbereiche vorgesehenen Zonen einen vergrösserten Flächenabstand aufweist. Damit lässt sich insbesondere ein unerwünschtes laterales Verrutschen der einzelnen Zuschnitte vermeiden. Ergänzend zu oder anstelle von dieser Massnahme ist gemäss einer weiteren vorteilhaften Ausführungsform (Anspruch 9) ein äusserer Randbereich des ersten Zuschnitts A und/oder ein innerer Randbereich des zweiten Zuschnitts B mit einer zur Bildung des Überlappungsbereichs ausgebildeten Einkragung versehen; alternativ dazu (Anspruch 10) ist am äusseren Randbereich des ersten Zuschnitts A und am inneren Randbereich des zweiten Zuschnitts B je eine Anschrägung vorhanden, welche zur Bildung des Überlappungsbereichs zusammenwirkend ausgebildet sind. Vorzugsweise bilden die Anschrägungen einen Winkel von 15 bis 75º vorzugsweise ungefähr 20 bis 30º gegenüber der Plattenebene.

Gemäss einer weiteren vorteilhaften Ausführungsform (Anspruch 11) weist der erste Zuschnitt A ein Verstärkungsgewebe, insbesondere ein Glasfasergewebe auf. Derartige Halbzeuge werden beispielsweise als GMTex bezeichnet und zeichnen sich durch besondere gute mechanische Belastbarkeit aus.

Ein weiterer Aspekt der Erfindung (Anspruch 12) betrifft ein flächiges Formteil aus einem faserverstärkten Thermoplasten, welches durch das erfindungsgemässe Verfahren herstellbar ist. Das erfindungsgemässe Formteil weist mindestens einen durch einen flächigen glasmattenverstärkten Thermoplasten gebildeten porösen Flächenbereich mit einem Luftporengehalt von mindestens 2 bis 80 Vol.-% und einem Flächengewicht von 1'200 bis 7'200 g/m² und einen stoffschlüssig damit verbundenen nichtporösen Flächenbereich mit einem Luftporengehalt von höchstens 3 Vol.-% auf. Die erfindungsgemässen Formteile können beispielsweise in Gestalt grosser Platten im Format von beispielsweise 700 x 1'700 mm oder 1'300 x 1'600 mm hergestellt werden.

Gemäss einer vorteilhaften Ausgestaltung des Formteils (Anspruch 13), weist dieses mindestens eine Deckschicht auf, die durch eine mit dem Thermoplasten gleichmässig imprägnierte textile Decklage gebildet ist und in dem porösen Flächenbereich eine im Wesentlichen intakte textile Oberflächenschicht aufweist. Dabei manifestiert sich ein Vorteil des erfindungsgemässen Herstellungsverfahrens, welches bei der Bildung der porösen Flächenbereiche eine vergleichsweise geringe mechanische Pressbelastung ausgeübt wird. Durch die intakte textile Oberflächenschicht lässt sich in den genannten Bereichen eine auch als "Soft-Touch" bezeichnete Haptik realisieren.

Gemäss einer weiteren vorteilhaften Ausgestaltung des Formteils (Anspruch 14) weist der poröse Flächenbereich mindestens zwei aufeinandergeschichtete Lagen des faserverstärkten Thermoplasten auf, wovon eine erste Lage A1 eine vergleichsweise niedrige Porosität und eine zweite Lage A2 eine vergleichsweise hohe Porosität aufweist. Damit lassen sich vorteilhafte Eigenschaften beider Materialien im Formteil realisieren. Insbesondere trägt die erste Lage A1 zur mechanischen Stabilität des Formteils bei während die zweite Lage zu einer besonders guten akustischen Charakteristik verhilft.

Die erfindungsgemässen flächigen Verbundteile haben mannigfache Anwendungsbereiche. Gemäss einem Aspekt der Erfindung (Anspruch 15) werden die erfindungsgemässen Verbundteile als Trennwand, Ladeboden, Unterboden, Türmodul, Dachmodul, Hutablage, Rücksitzlehne oder Seitenverkleidung, insbesondere im Automobilbereich verwendet.

### Kurze Beschreibung der Zeichnungen

Ausführungsbeispiele der Erfindung werden nachfolgend anhand der Zeichnungen näher beschrieben, dabei zeigen:
- Fig. 1 bis 6: verschiedene Ausführungsformen des Verfahrens zur Herstellung eines Formteils aus einem faserverstärkten Thermoplasten, wobei a) die Situation vor dem Verpressen, b) die Situation bei zusammengefahrenem Formwerkzeug und c) das entnommene Formteil, jeweils in einer Schnittdarstellung entlang der Werkzeugflächen darstellen;
- Fig. 7: eine fotografische Darstellung eines Formteils mit komplexer Formgebung, in perspektivischer Ansicht auf die Deckfläche; und
- Fig. 8: einen Ausschnitt des Formteils der Fig. 6, wobei einer der porösen Flächenbereiche durch eine gestrichelte Linie markiert ist.

### Wege zur Ausführung der Erfindung

Bei den im Folgenden erläuterten Beispielen wird jeweils mindestens ein Zuschnitt A eines thermisch expandierten GMT-Materials mit einem Gehalt von 10 bis 70 Gew.-% Verstärkungsfasern bereitgestellt, welches vor dem Erwärmen einen Luftporengehalt von höchstens 5 Vol.-% aufweist.

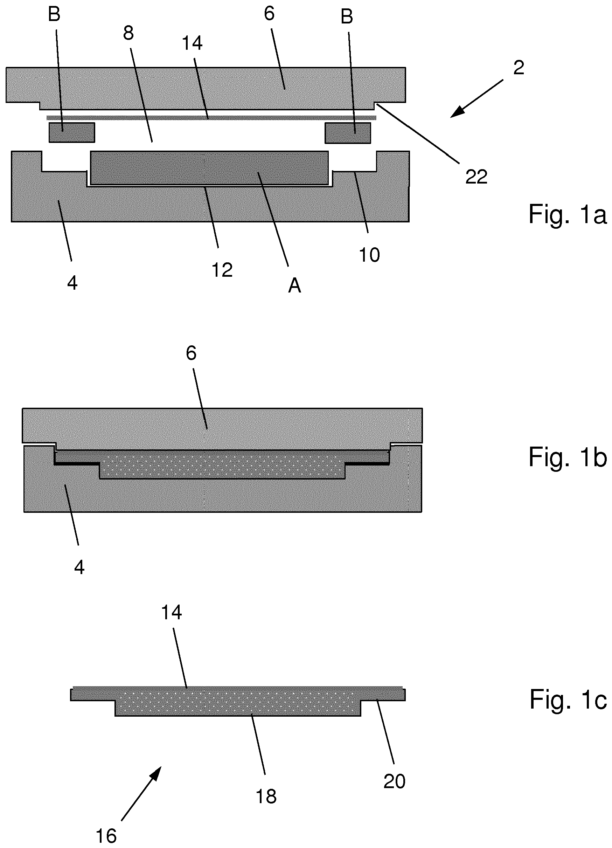

Die Fig. 1 zeigt eine erste Ausführungsform der Erfindung. Das in der Fig. 1a im geöffneten Zustand dargestellte, horizontal schliessende Formwerkzeug 2 umfasst eine untere Werkzeugfläche 4 sowie eine obere Werkzeugfläche 6, welche im geschlossenen Zustand des Formwerkzeugs gemäss Fig. 1b ein dazwischen liegendes Formvolumen 8 definieren. Im gezeigten Beispiel ist die untere Werkzeugfläche 4 strukturiert und weist einen von einem randständigen Bereich 10 umschlossenen mittigen Bereich 12 auf, der eine Zone mit vergrössertem Flächenabstand bildet

Zur Herstellung eines Formteils wird ein durch vorherige Erwärmung bereitgestellter Zuschnitt A von expandiertem GMT-Material in den mittigen Bereich 12 des Formwerkzeugs eingelegt. Das GMT-Material wird durch geeignete Massnahmen wie IR-Wärmestrahler und/oder Heissluftgebläse heiss gehalten. Im gezeigten Beispiel werden zudem weitere Zuschnitte B desselben Materials seitlich überlappend auf den mittleren Zuschnitt A gelegt. Die Menge des aufgelegten GMT-Materials bzw. die Dicke der Zuschnitte werden so gewählt, dass im anschliessenden Pressvorgang gemäss der jeweiligen Vorgabe ein zur Konsolidierung führender hoher Pressdruck oder ein zur Bildung eines porösen Flächenbereichs führender niedriger Pressdruck zur Anwendung kommt.

Im gezeigten Beispiel wird zudem zur Bildung einer Deckschicht des Formteils eine textile Decklage 14 auf die eingelegten Zuschnitte B-A-B drapiert. Anschliessend wird das Formwerkzeug zugefahren, wobei die darin befindlichen Zuschnitte verdichtet und mit der textilen Decklage verbunden werden. Das dabei gebildete Formteil 16 weist im Bereich des Zuschnitts A nach dem Verdichten einen mittigen porösen Flächenbereich 18 mit einem Luftporengehalt von mindestens 2 bis 80 Vol.-% auf. Ferner weist das Formteil 16 im gezeigten Beispiel im Bereich der Zuschnitte B einen mit dem porösen Flächenbereich 18 stoffschlüssig verbundenen konsolidierten Flächenbereich 20 in Form eines Kragens auf, dessen Luftporengehalt kleiner als derjenige des porösen Flächenbereichs ist und überdies höchstens 3 Vol.-% beträgt. Durch Wirkung von seitlichen Begrenzungsstrukturen 22 des Formwerkzeugs hat das darin hergestellte Formteil 16 einen definierten Umriss und kann dementsprechend als "near net-shape" Formteil bezeichnet werden.

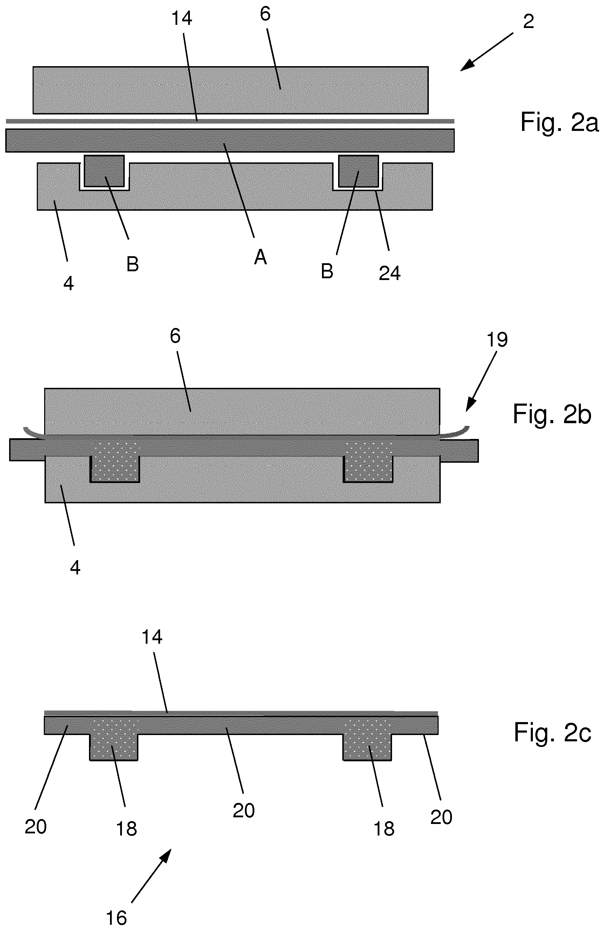

In den weiteren Beispielen der Fig. 2 bis 5 sind mit der Fig. 1 übereinstimmende Merkmale mit denselben Bezugszeichen versehen und werden dementsprechend nicht erneut eingeführt und erläutert.

Bei der Fig. 2 ragt der Zuschnitt A anfänglich über die Ränder eines Formwerkzeugs 2 ohne seitliche Begrenzungsstrukturen hinaus. Die untere Werkzeugfläche 4 weist einen in der Werkzeugebene umlaufenden Rücksprung 24 auf, während die obere Werkzeugfläche 6 planar ist. Es werden zunächst Zuschnitte B von expandiertem GMT-Material in den Rücksprung 24 eingelegt, danach wird ein die gesamte Werkzeugfläche überdeckender Zuschnitt A aufgelegt und schliesslich noch (optional) eine Decklage 14. Die Bestückung mit GMT-Material ist so gewählt, dass beim Zusammenfahren der Werkzeugflächen im Bereich der Zuschnitte B ein poröser Flächenbereich 18 gebildet wird, während in den übrigen Bereichen 20 des Zuschnitts A eine vollständige Konsolidierung eintritt. Um dies zu erreichen ist die Menge bzw. Dicke der Zuschnitte B genügend gering zu halten. Nach dem Verpressen werden die ausserhalb des Formwerkzeugs verbliebenen Randbereiche 19 weggetrimmt.

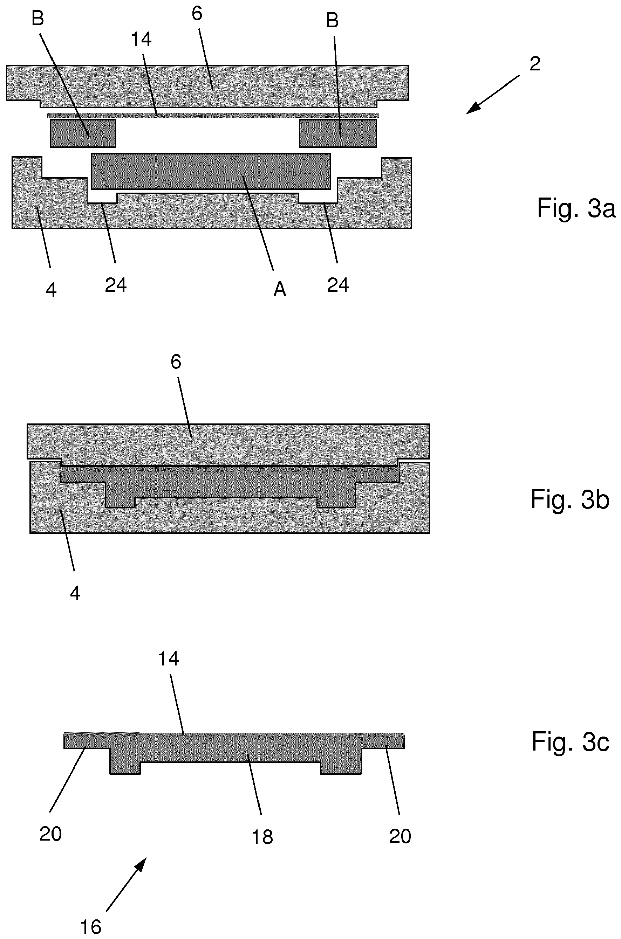

In den Fig. 3 bis 5 sind Abwandlungen eins Verfahrens zur Herstellung eines Formteils mit einem mittigen porösen Flächenbereich und einem umlaufenden konsolidierten Randbereich erläutert. Bei der Variante von Fig. 3 ist die untere Werkzeugfläche 4 wie bei der Fig. 2 mit einem umlaufenden Rücksprung 24 ausgestattet. Dieser wird jedoch nicht mit Zuschnitten B anfänglich belegt, sondern er dient als Auffangvolumen für das Material des darüber liegenden, vergleichsweise breiten Überlappungsbereichs eines mittigen Zuschnitts A und darüber aufgelegten seitlichen Zuschnitten B. Wie insbesondere aus der Fig. 3b ersichtlich, kann durch diese Massnahme erreicht werden, dass das Formbauteil im Überlappungsbereich 26 der Zuschnitte A und B porös bleibt.

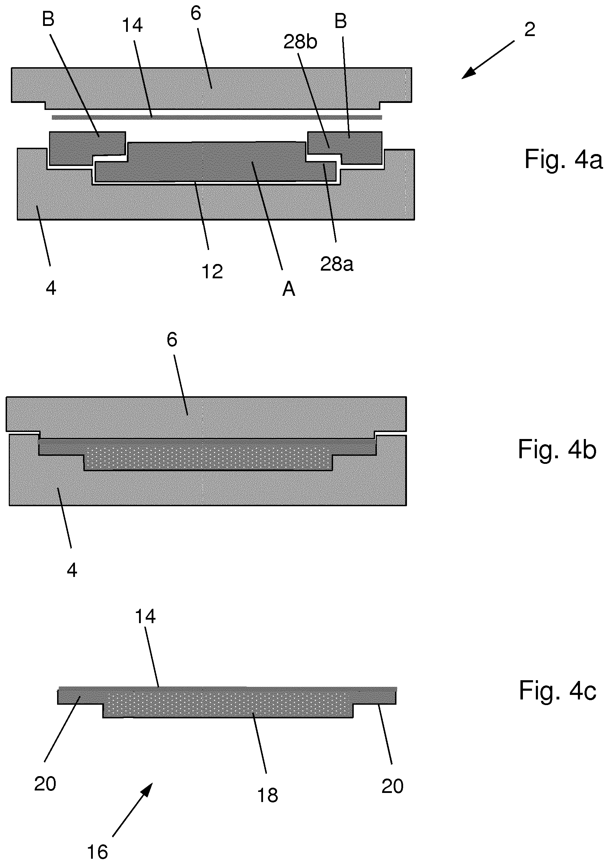

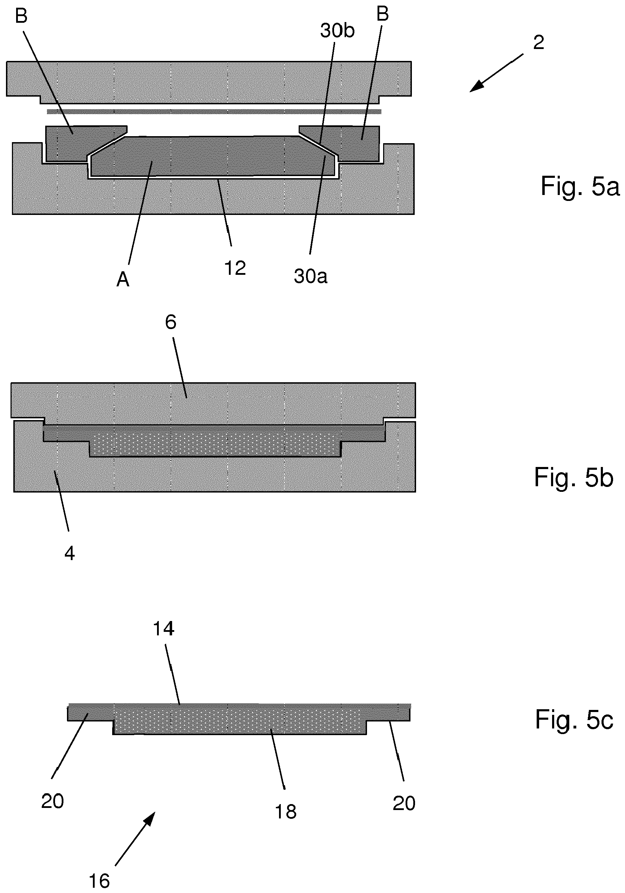

Ein entsprechendes Ergebnis kann gemäss den Fig. 4 und 5 auch mit dem in der Fig. 1 dargestellten Formwerkzeug erzielt werden. Wie in der Fig. 4 ersichtlich, ist hierfür ein äusserer Randbereich des ersten Zuschnitts A und/oder ein innerer Randbereich des zweiten Zuschnitts B mit einer zur Bildung des Überlappungsbereichs ausgebildeten Einkragung 28a und/oder 28b versehen. Alternativ kann gemäss der Fig. 5 am äusseren Randbereich des Zuschnitts A und am inneren Randbereich der zweiten Zuschnitte B jeweils eine Anschrägung 30a bzw. 30b angebracht werden, welche zur Bildung des Überlappungsbereichs zusammenwirkend ausgebildet sind.

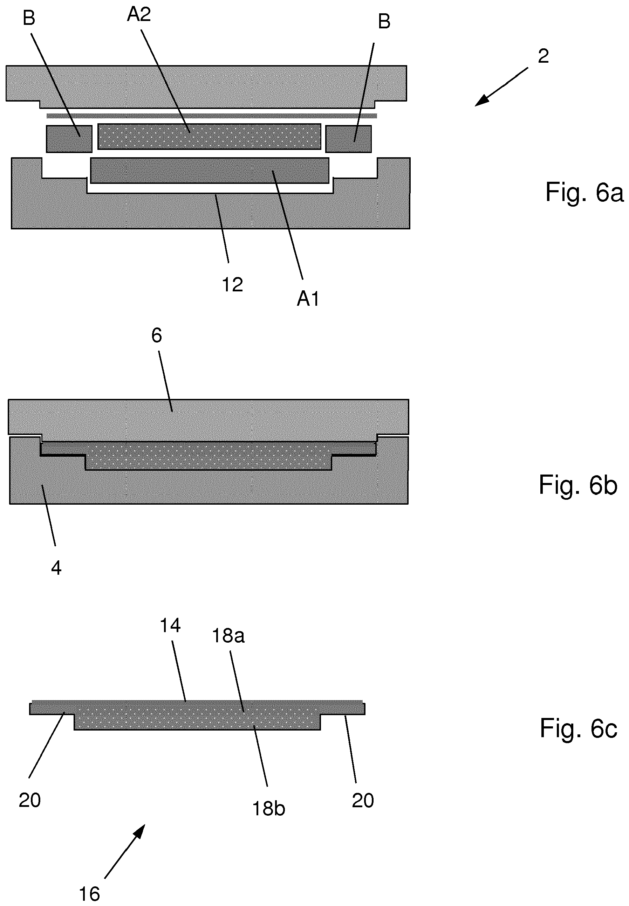

Bei der in Fig. 6 dargestellten Ausführungsform wird wiederum mit dem in der Fig. 1 gezeigten Formwerkzeug operiert. Zusätzlich zu dem mittigen Zuschnitt A1 und den randständigen Zuschnitten B, die alle aus expandierten GMT-Material bereitgestellt werden, wird über den Zuschnitt A1 ein weiterer, deckungsgleicher Zuschnitt A2 aufgelegt. Mit anderen Worten ist der insgesamt als A bezeichnete mittige Zuschnitt aus zwei Lagen A1 und A2 gebildet. Bei der Lage A2 handelt es sich um ein thermisch expandiertes LWRT-Halbzeug mit einem Gehalt von 20 bis 80 Gew.-% Verstärkungsfasern, welches vor dem Erwärmen einen Gehalt an gleichmässig verteilten Luftporen von 20 bis 80 Vol.-% aufweist. Wiederum wird optional noch eine Decklage 14 vor dem Verpressen aufgelegt. Das durch Verpressen gebildete Formteil weist einen mittigen porösen Flächenbereich 18 auf, der eine höher poröse obere Lage 18a und eine weniger poröse untere Lage 18b umfasst.

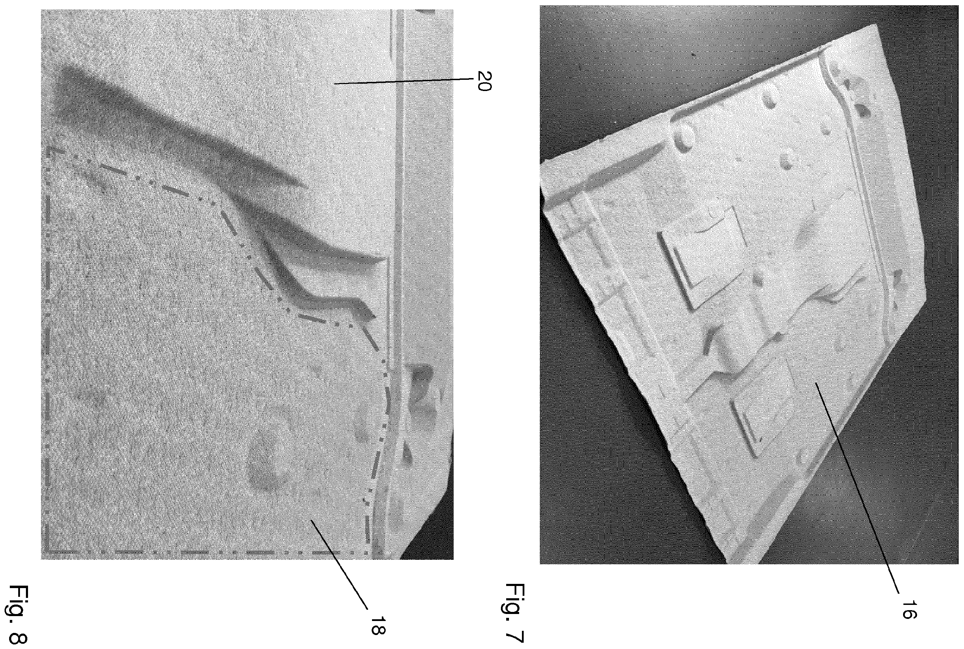

Das in den Fig. 7 und 8 beispielhaft dargestellte Formteil wurde mit einem Verfahren entsprechend demjenigen der Fig. 2 hergestellt, wobei ein Formwerkzeug mit komplexer Formgebung zum Einsatz kam. Dabei wurde eine hochdifferenzierte Formgebung erreicht. Die dabei gebildeten porösen Flächenbereiche (siehe insbesondere Fig. 8) zeichnen sich aufgrund der intakten Verstärkungsfaserstruktur durch eine "soft-touch" Haptik aus.

## Patentansprüche

1. Verfahren zur Herstellung eines Formteils aus einem faserverstärkten Thermoplasten durch Verpressen in einem zweiteiligen Formwerkzeug (2), wobei das Formwerkzeug zwei zusammenfahrbare Werkzeugflächen (4,6) aufweist, welche in geschlossenem Zustand des Formwerkzeugs ein dazwischen liegendes Formvolumen (8) definieren, und wobei das Verfahren die folgenden Schritte umfasst:
a) mindestens ein Zuschnitt aus einem flächigen Halbzeug aus faserverstärktem Thermoplasten wird auf eine Temperatur oberhalb des Schmelzpunktes des Thermoplasten erwärmt und dort gehalten, wobei ein thermisch expandierter Zuschnitt A gebildet wird;
b) der thermisch expandierte Zuschnitt A wird in das offene Formwerkzeug eingelegt;
c) optional wird zur Bildung einer Deckschicht des Formteils eine textile Decklage (14) auf den eingelegten Zuschnitt drapiert;
d) das Formwerkzeug wird zugefahren, wobei der darin befindliche Zuschnitt verdichtet und gegebenenfalls mit der textilen Decklage verbunden wird und dabei das Formteil (16) gebildet wird;
**dadurch gekennzeichnet, dass**
- der Zuschnitt A mindestens eine erste Lage A1 mit einem Gehalt von 10 bis 70 Gew.-% Verstärkungsfasern umfasst, welche vor dem Erwärmen einen Luftporengehalt von höchstens 5 Vol.-% aufweist, und dass
- der Zuschnitt A nach dem Verdichten mindestens einen porösen Flächenbereich (18) mit einem Luftporengehalt von mindestens 2 bis 80 Vol.-% aufweist.

2. Verfahren nach Anspruch 1, wobei der Zuschnitt A nach dem Verdichten mindestens einen mit dem porösen Flächenbereich (18) stoffschlüssig verbundenen konsolidierten Flächenbereich (20) aufweist, dessen Luftporengehalt kleiner als derjenige des porösen Flächenbereichs ist und überdies höchstens 3 Vol.-% beträgt.

3. Verfahren nach Anspruch 1 oder 2, wobei das Formwerkzeug eine strukturierte Werkzeugfläche aufweist, sodass mindestens eine Zone mit vergrössertem Flächenabstand (12) definiert wird.

4. Verfahren nach Anspruch 3, wobei das Formwerkzeug einen von einem randständigen Bereich (10) umschlossenen mittigen Bereich (12) aufweist, wobei entweder der mittige Bereich oder der randständige Bereich die Zone mit vergrössertem Flächenabstand bildet.

5. Verfahren nach einem der Ansprüche 1 bis 4, wobei der erste Zuschnitt A eine auf der ersten Lage A1 liegende zweite Lage A2 mit einem Gehalt von 20 bis 80 Gew.-% Verstärkungsfasern aufweist, welche vor dem Erwärmen einen Gehalt an gleichmässig verteilten Luftporen von 20 bis 80 Vol.-% hat.

6. Verfahren nach einem der Ansprüche 1 bis 5, wobei im Schritt b) mindestens zwei thermisch expandierte Zuschnitte A, B überlappend eingelegt werden, wonach überlappende Zuschnitte in einem jeweiligen Überlappungsbereich stoffschlüssig miteinander verbunden werden.

7. Verfahren nach Anspruch 6, wobei die jeweiligen Überlappungsbereiche eine Länge von 5 bis 300 mm, insbesondere 20 bis 50 mm aufweisen.

8. Verfahren nach Anspruch 6 oder 7, wobei das Formvolumen in den zur Bildung der jeweiligen Überlappungsbereiche vorgesehenen Zonen (24) einen vergrösserten Flächenabstand aufweist.

9. Verfahren nach Anspruch 6 oder 7, wobei ein äusserer Randbereich des ersten Zuschnitts A und/oder ein innerer Randbereich des zweiten Zuschnitts B mit einer zur Bildung des Überlappungsbereichs ausgebildeten Einkragung (28a,28b) versehen ist.

10. Verfahren nach Anspruch 6 oder 7, wobei am äusseren Randbereich des ersten Zuschnitts A und am inneren Randbereich des zweiten Zuschnitts B je eine Anschrägung (30a,30b) vorhanden ist, welche zur Bildung des Überlappungsbereichs zusammenwirkend ausgebildet sind.

11. Verfahren nach einem der Ansprüche 1 bis 10, wobei der erste Zuschnitt A ein Verstärkungsgewebe aufweist.

12. Flächiges Formteil (16) aus einem faserverstärkten Thermoplasten, herstellbar durch ein Verfahren nach einem der vorangehenden Ansprüche, **dadurch gekennzeichnet, dass** das Formteil mindestens einen durch einen flächigen glasmattenverstärkten Thermoplasten gebildeten porösen Flächenbereich (18) mit einem Luftporengehalt von mindestens 2 bis 80 Vol.-% und einem Flächengewicht von 1'200 bis 7'200 g/m² und einen stoffschlüssig damit verbundenen nichtporösen Flächenbereich (20) mit einem Luftporengehalt von höchstens 3 Vol.-% aufweist.

13. Formteil nach Anspruch 12, wobei mindestens eine Deckschicht durch eine mit dem Thermoplasten gleichmässig imprägnierte textile Decklage (14) gebildet ist und in dem porösen Flächenbereich eine im Wesentlichen intakte textile Oberflächenschicht aufweist.

14. Formteil nach Anspruch 12 oder 13, wobei der poröse Flächenbereich mindestens zwei aufeinandergeschichtete Lagen des faserverstärkten Thermoplasten aufweist, wovon eine erste Lage A1 eine vergleichsweise niedrige Porosität und eine zweite Lage A2 eine vergleichsweise hohe Porosität aufweist.

15. Verwendung eines Formteils nach einem der Ansprüche 12 bis 14 als Trennwand, Ladeboden, Unterboden, Türmodul, Dachmodul, Hutablage, Rücksitzlehne oder Seitenverkleidung, insbesondere im Automobilbereich.
